Europäisches Patentamt

European Patent Office

Office européen des brevets

(11) Publication number: **0 319 105**
**A1**

# (12) EUROPEAN PATENT APPLICATION

(21) Application number: **88202737.8**

(22) Date of filing: **30.11.88**

(51) Int. Cl.⁴: **H04N 7/00**

(30) Priority: **03.12.87 NL 8702917**

(43) Date of publication of application:
**07.06.89 Bulletin 89/23**

(84) Designated Contracting States:
**AT BE CH DE ES FR GB IT LI NL SE**

(71) Applicant: **N.V. Philips' Gloeilampenfabrieken**
**Groenewoudseweg 1**
**NL-5621 BA Eindhoven(NL)**

(72) Inventor: **Ruitenburg, Leonardus Joseph**
**Michael**
**c/o INT. OCTROOIBUREAU B.V. Prof.**
**Holstlaan 6**
**NL-5656 AA Eindhoven(NL)**

(74) Representative: **Schoonheijm, Harry Barend et**
**al**
**INTERNATIONAAL OCTROOIBUREAU B.V.**
**Prof.Holstlaan 6**
**NL-5656 AA Eindhoven(NL)**

(54) **TV broadcasting system for the transmission of a high-definition time-division multiplex TV signal.**

(57) TV broadcasting system for the transmission of a time-division multiplex television signal discrete lines of which successively comprise first, second and third sections incorporating a digital sound/data component with a bit rate of 10.125 Mbit/sec, a time-compressed encoded chrominance component and a time-compressed encoded luminance component, respectively, said time-division multiplex television signal also comprising a digital picture encoding signal.

In order to render picture encoding possible with a fast adaptation to movements in the TV picture in which compatibility, notably with the D2-MAC TV system, is maintained, the digital picture encoding signal is incorporated in the said first section in frequency-division multiplex with the sound/data component, which digital picture encoding signal has a clock frequency which is in a fixed ratio to that of the sound/data component.

FIG.1

FIG.2

**TV broadcasting system for the transmission of a high-definition time-division multiplex TV signal.**

The invention relates to a TV broadcasting system for the transmission of a time-division multiplex television signal discrete lines of which successively comprise first, second and third sections incorporating a digital sound/data component with a bit rate of 10.125 Mbit/sec, a time-compressed encoded chrominance component and a time-compressed encoded luminance component, respectively, said time-division multiplex television signal also comprising a digital picture encoding signal. The invention also relates to a TV transmitter and a TV receiver for use in such a TV broadcasting system.

A TV broadcasting system of the type described above and a TV transmitter and a TV receiver suitable for use in this system are known, for example, from the Article "HD-MAC: a step forward in the evolution of television technology" by M.J.J.C. Annegarn et al, published in Philips Technical Review, Vol. 43, no. 8, 1987.

The known TV broadcasting system - hereinafter briefly referred to as HD-MAC TV system - transmits TV pictures with a picture definition which is higher than is possible in the previous D2-MAC TV system as defined in the document "Specification des systèmes D2-MAC/Packet" published by the French "Premier Ministre Sécrétariat d'Etat chargé des Techniques de la Communication" of September 1985, in an aspect ratio which deviates from the normal value of 3:4 and is, for example, 9:16. The choice of picture encoding techniques and interlacing methods with which such a transmission of high-definition TV pictures is obtained in the HD-MAC TV system is based on the condition that an evolutionary introduction of the HD-MAC TV system into the D2-MAC system must be possible, whilst the existing D2-MAC equipment remains usable and maintains the quality for which it has originally been designed. Due to this condition of compatibility the bandwidth and signal format of this HD-MAC TV signal should at least correspond to that of the D2-MAC TV signal. For the transmission of information about picture encoding, method of interlacing and aspect ratio used -hereinafter briefly referred to as picture encoding information - the first-mentioned article proposes to transmit this information in the known HD-MAC TV system during the field fly back periods. However, in practice the field fly back periods are largely utilized for the transmission of teletext information and they provide insufficient capacity for the transmission of picture encoding information.

It is an object of the invention to provide the possibility of a simple transmission of digital picture encoding information in the HD-MAC TV system of the type described in the opening paragraph while maintaining compatibility with the D2-MAC TV system.

Such a TV broadcasting system according to the invention is therefore characterized in that the digital picture encoding signal is incorporated in the said first section in frequency-division multiplex with the sound/data component, said digital picture encoding signal having a bit rate which is in a fixed ratio to and is at most equal to that of the sound/data component.

As compared with the known HD-MAC TV signal, much more picture encoding information can be transmitted per unit of time, resulting in a higher picture definition when using the measure according to the invention. Coupling the bit rate and hence the clock frequency of the picture encoding signal to that of the sound/data component provides the possibility of reliably encoding and decoding this signal, whilst the frequency spectrum of the picture encoding signal can simply be prevented from overlapping that of the sound/data component.

A TV receiver according to the invention for use in this TV broadcasting system, comprising a time-division demultiplexing device is characterized by a frequency-division demultiplexing circuit coupled to an output of said device for demultiplexing the sound/data component and the picture encoding signal incorporated in the first section in frequency-division multiplex, said circuit being coupled via a time expansion circuit to a picture encoding signal processing device, and comprising a clock frequency circuit for deriving the clock frequency of the digital picture encoding signal from that of the sound/data component which is coupled to the time expansion circuit.

A preferred embodiment of such a TV broadcasting system is characterized in that the bit rate of the digital sound/data component is an integral multiple of that of the picture encoding signal and in that the digital picture encoding signal is modulated at a subcarrier frequency which is an integral multiple of half the clock frequency of the digital picture encoding signal.

This measure provides the possibility of using interpolation filters in the transmitter as well as in the receiver. Such interpolation filters are known per se, for example, from the Article "Interpolation and Decimation of Digital Signals - A Tutorial Review" by R.E. Crochiere and L.R. Rabiner, published in Proceedings of the IEEE, Vol. 69, no. 3, March 1981, pp. 300-331 and they reduce the selectivity requirements of filters required in the transmitter and receiver for the selection of the baseband sound/data and/or the subcarrier frequency-modulated picture encoding signal.

A TV transmitter for use in such a system is therefore characterized by an interpolation filter having a sampling frequency which is an integral multiple of the clock frequency of the digital picture encoding signal for a selection of a frequency spectrum of the digital picture encoding signal with a central frequency at half the sampling frequency of the time-compressed picture and luminance components.

The subcarrier frequency in the transmitter is preferably chosen at half the sampling frequency of the time-compressed luminance component. The capacity of the time-division multiplex channel constituted by the said first section is thereby utilized to an optimum extent.

A TV receiver for co-operation with such a TV transmitter in the last-mentioned TV broadcasting system having a clock regeneration at a clock frequency of 20.25 MHz is characterized in that the frequency-division demultiplexing circuit comprises first and second sampling circuits which are jointly connected to an input of the frequency-division demultiplexing circuit to which the last-mentioned clock frequency is applied for alternately sampling the frequency-division multiplex signal incorporated in the first section in the first and second sampling circuits, and outputs of which are coupled to an adder stage and a subtractor stage for a mutual addition and subtraction, respectively, of the output samples of the first and second sampling circuits, said adder stage being coupled to a sound/data signal processing device via a low-pass filter having a cut-off frequency of half the clock frequency of the sound/data component, said subtractor stage being coupled to the picture encoding processing device via a low-pass filter having a cut-off frequency of half the clock frequency of the digital picture encoding signal.

This measure provides the possibility of realizing the frequency-division demultiplexing circuit in a simple way.

Another preferred embodiment of the last-mentioned TV receiver is characterized in that the frequency-division demultiplexing circuit is preceded by a low-pass filter having a Nyquist edge at half the sampling frequency of the time-compressed luminance component.

When using this measure, the low-pass filter is operating both for the picture encoding signal and for the frequency-division multiplex sound/data component, whilst foldover is prevented.

If the digital picture encoding signal is duobinary encoded, a TV receiver according to the invention is preferably characterized by a Viterbi decoding coupled to an output of the frequency-division demultiplexing device and adapted to the duobinary encoding for a correction of errors in at least the digital picture encoding signal.

When using this measure, the redundancy provided at the transmitter end by means of the duobinary encoding is used in the receiver for an error correction.

A transmitter for realizing such a duobinary encoding of the picture encoding signal is preferably characterized by a duobinary encoding circuit for duobinary encoding the digital picture encoding signal, which circuit comprises an exclusive OR-gate having first and second inputs and an output, the first input constituting an input for the digital picture encoding signal and the output being connected to the second input via a first delay circuit, said output being coupled to a first input of a subtractor stage and to a second input of the subtractor stage via a second delay circuit, said subtractor stage supplying the binary encoded picture encoding signal, said first and second delay circuits realizing a mutually equal bit delay having a value which is at most equal to the clock period of the digital encoding signal.

The invention will now be described in greater detail, by way of example, with reference to the accompanying drawings in which

Fig. 1 shows a time diagram of a line period of a time-division multiplex television signal in a TV broadcasting system according to the invention;

Fig. 2 shows the frequency spectrum of the frequency-division multiplex signal occurring during the first section of the time-division multiplex television signal;

Fig. 3 shows the frequency spectrum of the modulated digital picture encoding signal obtained at the output of an interpolation filter in the transmitter of Fig. 4;

Fig. 4 shows a TV transmitter suitable for transmitting the said time-division multiplex television signal;

Fig. 5 shows a TV receiver for receiving the said time-division multiplex television signal.

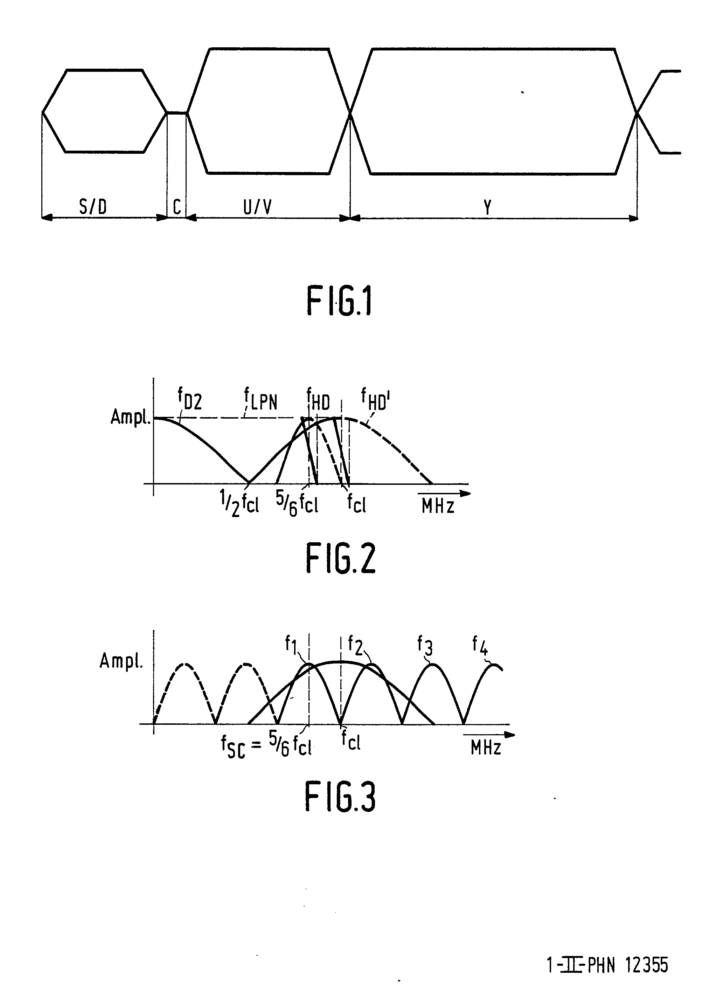

Fig. 1 shows the time diagram of a line period of a time-division multiplex television signal according to the invention, which successively comprises a first section of 11 $\mu$sec, a clamping period C of 1 $\mu$sec, a second section of 17$\mu$sec and a third section of 34 $\mu$sec, which sections successively incorporate a digital sound/data component S/D, a clamping period C, a time-compressed encoded chrominance (chroma) component U/V and a time-compressed encoded luminance component Y. The sampling frequency for the time-compressed chrominance and luminance components - hereinafter referred to as picture components - is 20.25 MHz after compression at which for a compression factor of 3/2 for Y and 3 for U/V as in the case shown the sampling frequency before compression is 13.5 MHz for Y and 6.25 MHz for the U and V signal. If the channel basebandwidth is defined as the maximum bandwidth of the baseband signal which can be transmitted through the relevant channel, and starting from a channel basebandwidth of 8.4 and 10.125 MHz, respectively, the maximum Y bandwidth to be sampled is 2/3 x 8.4 and 10.125 MHz = 5.6 and 6.75 MHz, respectively, and the U/V bandwidth is 1/3 x 8.4 and 10.125 MHz = 2.8 and 3.4 MHz, respectively. In practice the actual channel width is chosen to be slightly larger, for example, 12 MHz at the said channel basebandwidth of 10.125 MHz in order to be able to filter the signal with a sufficient selectivity in the receiver.

At the same channel width of, for example, 8.4 MHz a larger bandwidth, namely 6.75 MHz for the Y information is available at the expense of a smaller bandwidth, namely 1.7 MHz for the U/V information by using a lower compression value, for example, 5/4 for Y and a higher compression value, for example, 5 for U/V (not shown). The second section in this example (not shown) is 10.4 $\mu$sec and the third section is 41.6 $\mu$sec.

Since in addition to the aspect ratio of 4:3 which is commonly used in the D2-MAC TV system an aspect ratio of 16:9 must be possible, already four different types of picture encoding occur in combination with the said different compression values. To improve the resolution in the vertical and horizontal direction, motion-dependent picture encoding operations can be performed in different ways. The description is thus far known per se from the first-mentioned article.

Fig. 2 shows the frequency spectra of the sound/data component $f_{D2}$ and the digital picture encoding signal $f_{HD}$ and $f'_{HD}$ incorporated in frequency-division multiplex in the first section of a time-division multiplex television signal according to the invention. As is known from the said article, $f_{D2}$ extends from 0 to half the clock frequency $1/2 f_{cl}$ i.e. approximately 5 MHz. The digital picture encoding signal is double-amplitude-modulated with a suppressed carrier (DSB AM SC) at a subcarrier frequency $f_{SC}$ which is chosen such that $f_{HD}$ is outside the frequency spectrum of $f_{D2}$ and is entirely or at least halfway between $1/2 f_{cl}$ and the baseband cut-off frequency of the transmission channel. $f_{SC}$ is preferably in a fixed ratio to a clock frequency which can simply be recovered, for example, that of the sound/data component of $f_{cl}$ = 10.125 MHz and it is at or near the cut-off frequency of the channel basebandwidth. The frequency-division multiplex signal transmitted in the first section then comprises the $f_{SC}$-modulated picture encoding signal in a vestigial sideband, that is to say, the lower sideband and a part of the upper sideband of the frequency spectrum. Moreover, it is recommendable to give the clock frequency of the digital picture encoding signal a fixed relationship with the said clock frequency which can simply be recovered. The clock frequency or bit rate of the digital picture encoding signal is preferably 1/N times that of the sound/data component, where N = 1, 2, .... This renders interpolation filtering techniques possible, as will hereinafter be described in greater detail. In the case shown by means of $f_{HD}$ in Fig. 2 the bit rate of the digital picture encoding signal is chosen to be 1/3 of that of the sound/data component, that is to say, at 3 3/8 Mbit/sec and $f_{SC}$ at 5/6 $f_{cl}$ = 8.4 MHz. In the case shown by means of $f'_{HD}$ in Fig. 2 the bit rate of the digital picture encoding signal is chosen to be equal to that of the sound/data component and $f_{SC}$ at $f_{cl}$ = 10.125 MHZ. To prevent foldover, the transmission channel constituted by transmitter and receiver should have a low-pass Nyquist edge at the respective values for $f_{SC}$.

Fig. 3 shows the frequency spectrum of the digital picture encoding signal obtained by means of interpolation techniques for realizing the frequency spectrum denoted by $f_{HD}$ in Fig. 2, which will be described hereinafter.

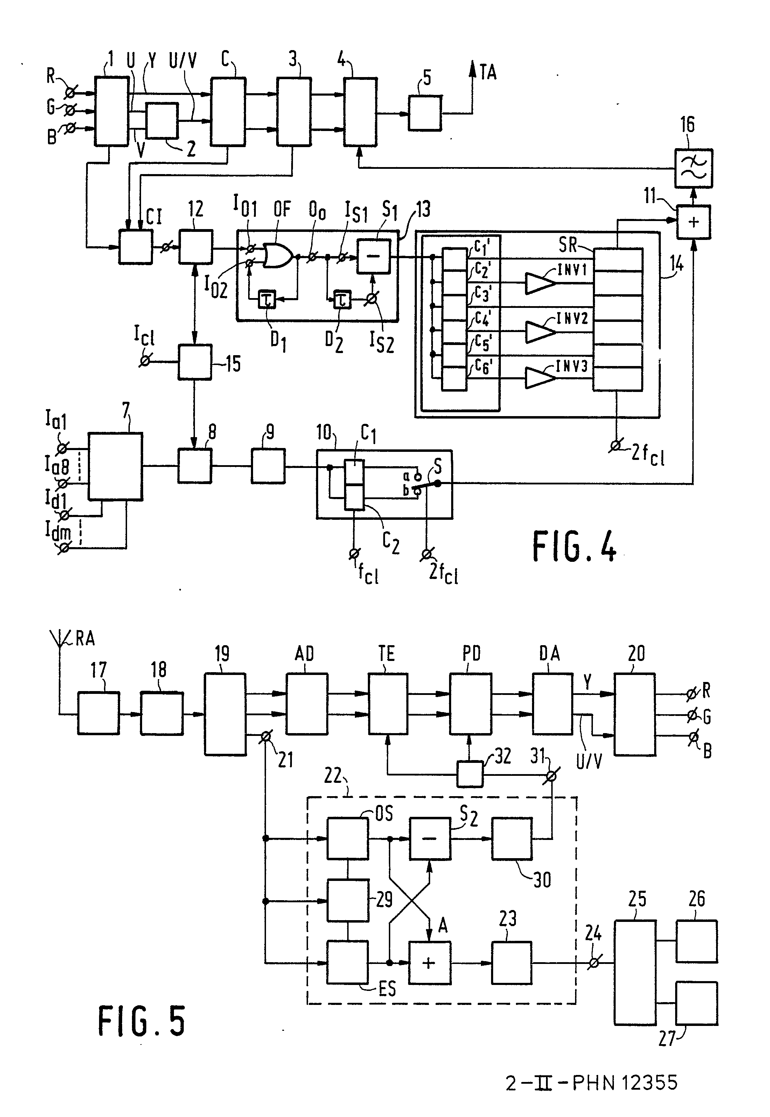

Fig. 4 shows a TV transmitter according to the invention, comprising a picture signal converter 1 to which the primary colour signals R, G and B of a TV picture signal from a video signal source (not shown) are applied through three inputs, which signals are converted into two chrominance components U and V and one luminance component Y in a digital form. This picture signal conversion may successively also comprise a scanning conversion, that is to say, a transition from an interlaced to a sequential picture, vertical filtering, decimation and interlacing (not shown) as described in the previously mentioned Article. The chrominance components U and V are applied to a chroma filter 2 which applies U and V alternately line by line and after a selection to a picture encoding circuit C. The luminance component Y is also applied to this picture encoding circuit C, which components Y and U/V are suitably encoded, for example, by means of a motion-dependent picture encoding as is known per se from the said Article by Annegarn et al., in which method a so-called motion vector is formed. The picture encoding circuit C is coupled to a compression circuit 3 in which the encoded picture component is time-compressed to the values of the second and third sections as mentioned above. The compression circuit 3 is coupled to a time-division multiplexing device 4 which is coupled via a transmitter modulation and output stage 5 to a transmitter antenna TA.

The transmitter shown also comprises a sound/data signal processing section 7 having eight audio

inputs $I_{a1}$-$I_{a8}$ to which analog monophonic or stereophonic audio signals are applied, and data inputs $I_{d1}$-$I_{dm}$ to which m digital information signals are applied. This sound/data signal processing section 7 digitizes the audio signals and forms them together with the digital information signals into a packet-structured sound/data signal S/D, and is coupled to a clock-controlled compression circuit 8 in which the sound/data signal S/D is time-compressed to the above-mentioned value for the first section. The bit rate of S/D is then 10.125 Mbit/sec. The compression circuit 8 is coupled to the time-division multiplexing device 4 via a duobinary encoding circuit 9, an interpolation filter 10 to be described hereinafter, an adder stage 11 and a low-pass filter 16, in which device S/D, together with Y and U/V are formed into a time-division multiplex television signal as is known per se from the previously mentioned Article by Annegarn et al.

The interpolation filter 10 is based on an interpolation technique known from, for example, the afore-mentioned Article by R.E. Crochiere and L.R. Rabines. The S/D bit series applied to the interpolation filter 10 with bit values $d_n$ at sampling instants determined by the clock frequency $f_{cl} = 10.125$ MHz arrives in an unchanged form at terminal a of a switch S via a clock-controlled delay circuit C1. From this S/D bit series an interpolation bit series is calculated in a conversion circuit C2, the bit values satisfying the expression

$$\sum_{j=-k}^{k} d_{n+j} \cdot \frac{\sin \pi 2 \frac{i+1}{2}}{\pi \cdot \frac{2j+1}{2}}, \text{ in which } K \rightarrow \infty.$$

In practice K is 3 to 4 in order to prevent long calculation times. These bit values are simultaneously read with the bit values $d_n$ from the last-mentioned delay circuit C1 at a clock frequency which is equal to $f_{cl} = 10.125$ MHz. By switching the switch S to a frequency $2f_{cl}$ a new bit series is obtained whose bit values $d_m$ are equal to $d_n$ for $m = 2n$ and to the above-mentioned expression for $m = 2n+1$. The frequency spectrum of the new bit series $d_m$ at $2f_{cl}$ thus obtained does not comprise signal components or frequency lobes in the range between $\pi/Ta$ and $3\pi/Ta$, with TA $= 1/f_{cl}$ so that the low-pass filter 16 can be less selective than without the use of the interpolation filter 10.

The transmitter according to the invention also comprises a picture encoding signal shaper CI which is coupled to the picture signal converter 1, the picture encoding circuit C and the compression circuit 3 for forming a digital picture encoding signal or a HD signal comprising information about the picture encoding applied to the picture signal and particularly motion information, compression, aspect ratio, etc. The picture encoding signal shaper CI is coupled to the adder stage 11 via a compression circuit 12, a duobinary encoding circuit 13 and an interpolation filter 14 operating as a modulator and a filter.

The compression circuit 12 compresses the HD signal to the period of the said first section, the bit rate of the HD signal being chosen to be, for example, 1/3 of or equal to that of S/D and the clock frequency being 1/3 $f_{cl}$ or $f_{cl}$.

The duobinary encoding circuit 13 has an exclusive OR-gate OF having first and second inputs and an output, to which first input the HD signal of the compression circuit 12 is applied and which output is fed back via a first delay circuit D1 to the last-mentioned second input. The output is coupled both to a first input and via a second delay circuit D2 to a second input of a subtractor stage S. The delay times of the delay circuits D1 and D2 are mutually equal and amount to one period of the clock frequency of the HD signal. The duobinary encoding circuits 9 and 13 mutually differ in that the one circuit (9) comprises an adder stage (not shown) at the position where the other circuit (13) has a subtractor stage and in that in the one binary encoding circuit 9 the adder stage is succeeded by a level shift (not shown), whilst the delay times of the circuits corresponding to the said first and second delay circuits D1 and D2 are of course adapted to the clock frequency $f_{cl}$ of the S/D component.

The duobinary encoding circuit 13 supplies frequency lobes which are located symmetrically around $(2K+1) \pi/T$ with $K = 0, \pm 1, \pm 2, ...$ in which $1/T$ is equal to the clock frequency of the relevant signal, i.e. 1/3 $f_{cl}$ as is shown by means of the broken-line and solid-line curves in Fig. 3. Since a duobinary encoding circuit having the structure of the circuit 9 supplies frequency lobes symmetrically around $2k \pi/T$ with $K = 0, \pm 1, \pm 2$, etc., the operation of the duobinary encoding circuit 13 can be compared with that of the circuit 9 succeeded by a modulation at half the clock frequency $\frac{1}{2} T$.

In principle the interpolation filter 14 has the same operation as the interpolation filter 10, but unlike interpolation filter 10, which selects the baseband frequency lobe, it selects the frequency lobe around $5\pi/T$. To this end 6 new bit series $D'_{6n+0}$ -$D'_{6n+5}$ are calculated in conversion circuits $C'_1$-$C'_6$ from the bit values $D_n$ of the original HD signal of the binary encoding circuit 13 whose bit values satisfy

$$D'6_{n+i} = \sum_{j=-K}^{k} D_{n+j} \frac{3}{\pi(6j+i)} \sin\frac{\pi(6j+i)}{3}$$

with $i = 1, 2, ..., 5$ and $K \rightarrow \infty$

In practice $K$ is equal to 3 or 4 in order to prevent long calculation times, as stated hereinbefore with reference to $d_m$, and $D'_{6n} = D_n$, that is to say, $D'_{6n}$ is equal to the original HD bit series $D_n$ delayed over the calculation time of $C'_2 - C'_6$.

The new bit series $D'_{6n+1} - D'_{6n+5}$ is read at the clock frequency of the digital picture encoding signal HD. The bit series $D'_{6n+1}$, $D'_{6n+3}$ and $D'_{6n+5}$ are inverted in inversion circuits INV1-INV3, respectively, and the bit series $D'_{6n}$ to $-D'_{6n+5}$ thus obtained are applied at the last-mentioned clock frequency of the HD signal to 6 successive memory sites of a shift register SR and successively read at a clock frequency which is equal to six times the clock frequency of the HD signal.

In the frequency spectrum of the output signal of the shift register SR the first and second frequency lobes around $\pi/T$ and $3\pi/T$ shown in broken lines in Fig. 3 are absent and the frequency lobes around $5\pi/T$, etc. shown by means of the solid-line curves $f_1$, $f_2$, $f_3$, $f_4$ are present. Addition of these frequency lobes $f_1-f_4$ of this HD signal to the aforementioned baseband S/D signal in the adder stage 11 results in an S/D, HD frequency-division multiplex signal -hereinafter referred to as S/D, HD FMX - as shown in Fig. 2, which can simply be deprived of a part of the upper sideband of $f_1$ of the higher frequency lobes $f_2$, $f_3$, etc. by means of the low-pass filter 16 and can be limited in bandwidths to a basebandwidth of approximately 8.4 MHz. This frequency-division multiplex signal, after being applied to the time-division multiplexing circuit 4, is incorporated in the first section of the time-division multiplex television signal according to the invention. At the given values for the clock frequency the central frequency $f_{SC}$ of the HD frequency spectrum is at 8.4 MHz which is approximately equal to half the sampling frequency of the picture components before compression. The clock frequencies required for the compression and encoding circuits and the interpolation filters can be derived in a simple manner from a single clock signal by frequency-division in a frequency divider 15.

At a channel basebandwidth of 10.125 MHz it is possible to vary the frequency spectrum of the modulated HD signal in the way as is shown by means of curve $f'_{HD}$ in Fig. 2.

To this end the bit rate and hence the clock frequency of the HD signal should be chosen to be equal to that of the sound/data component, the binary encoding circuit 13 should be replaced by a binary encoding circuit which is identical to the circuit 9, and the interpolation filter 14 should correspond to the interpolation filter 10, on the understanding that the output of the conversion circuit corresponding to the conversion circuit $C_2$ is connected to the terminal corresponding to b via an inversion circuit (not shown).

Fig. 5 shows a TV receiver according to the invention suitable for co-operation with the TV transmitter of Fig. 4. The TV receiver shown comprises a receiver section 17 in which a desired RF time-division multiplex television signal is selected, demodulated and converted to the baseband. The receiver section 17 is coupled to a time-division demultiplexing device 19 via a low-pass filter 18 which has a Nyquist edge about the said central frequency $f_{SC}$ of the modulated HD signal. The Nyquist edge prevents possible foldover in the further processing of the components of the time-division multiplex television signal and limits the transmission characteristic of the transmission channel constituted by transmitter and receiver, as is indicated by means of oblique lines in Fig. 2. The device 19 demultiplexes the time-division multiplex television signal in the original separate components Y, U/V and the S/D, HD FMX signal. The picture signal components are applied to an analog-to-digital converter AD coupled to the demultiplexing device 19, in which converter Y and U/V are digitized and subsequently time-expanded in an expansion circuit TE. In a subsequent picture decoding circuit PD a decoding of Y and U/V is effected by means of the HD information transmitted in the S/D, HD FMX signal, which decoded Y and U/V signal are converted to an analog form in a digital-to-analog converter DA and converted to the primary colour signals R, G and B by means of a picture signal converter 20.

The S/D, HD FMX signal is applied to a frequency-division demultiplexing circuit 22 via a terminal 21 of the demultiplexing device 19. This circuit comprises even and odd sampling devices ES and OS, respectively, coupled to the terminal 21 and a clock generation circuit 29 for generating a clock frequency which is twice that of the sound/data component S/D, that is to say, $2 f_{cl} = 20.25$ MHz. i.e. the sampling frequency of the luminance signal, and is applied to the said even and odd sampling devices ES and OS. The even and odd sampling devices ES and OS alternately sample the S/D, HD FMX signal resulting in so-called even and odd signal samples which occur at a clock frequency of $f_{cl}$ at the outputs of ES and OS, respectively. These outputs are coupled to inputs of an adder stage A and a subtractor stage S2 in which these even and odd signal samples are mutually added and subtracted, respectively.

The adder stage A thus supplies the digital baseband sound/data signal S/D which is available at an S/D terminal 24 after selection in a low-pass filter 23 coupled to the adder stage A. The cut-off frequency of the low-pass filter 23 is chosen at 5MHz, which is approximately the highest frequency in the original baseband sound/data signal. The S/D terminal 24 is coupled to a sound/data separation circuit 25 in which the sound/data signal S/D is separated into mutually separate sound and data signals and which is coupled to a sound and a data signal processing unit 26 and 27, respectively, for further processing and display of these signals.

The subtractor stage S2 supplies the digital baseband HD signal which is available at a HD terminal 31 via a selection in a low-pass filter 30 coupled to the subtractor stage S2. The cut-off frequency of the low-pass filter 30 is chosen at 3.4 or 5 MHz, which is approximately the highest frequency in the original baseband HD signal with a clock frequency of 1/3 $f_{cl}$ or 1/2 $f_{cl}$ The HD terminal 31 is coupled to a picture encoding signal processing unit 32 for processing the picture encoding signal and for applying the compression information to the expansion circuit TE and the picture encoding information to the picture decoding device PD.

The operation of the frequency demultiplexing circuit 22 is based on the decimation techniques known from the afore-mentioned Article by R.E. Crochiere et al.

It will be evident that the inventive concept can also be used for modulation/demodulation methods other than the one shown. For example, in the TV transmitter of Fig. 4 the digital picture encoding signal may be modulated at $f_{SC}$ in a multiplier stage operating as a modulator, directly or via a conventional duobinary encoding circuit which corresponds to the duobinary encoding circuit 9. At suitably chosen values for the bit rate and $f_{SC}$, a signal obtained thereby can be received by the TV receiver of Fig. 5 in which the frequency-division demultiplexing circuit 22 may or may not be replaced by a more conventional type, for example, a first low-pass filter for the sound/data component and a demodulator succeeded by a second low-pass filter for the picture encoding signal. Moreover, the values stated for $f_{SC}$ and the bit rate of the HD signal are mentioned for the purpose of illustration and other suitably chosen values are alternatively usable.

It is also possible to apply a duobinary Viterbi decoding adapted to the duobinary encoding of the HD signal and/or that of the sound/data component in the TV receiver, as has been described in French Patent Application no. 8703085 in the name of the Applicant. With this decoding method transmission errors in the received duobinary HD and/or sound/data signals can be corrected to a certain extent. Such a duobinary Viterbi decoding is preferably effected in the signal processing units 32 and/or 25, 26 or 27.

## Claims

1. A TV broadcasting system for the transmission of a time-division multiplex television signal discrete lines of which successively comprise first, second and third sections incorporating a digital sound/data component with a bit rate of 10.125 Mbit/sec, a time-compressed encoded chrominance component and a time-compressed encoded luminance component, respectively, said time-division multiplex television signal also comprising a digital picture encoding signal, characterized in that the digital picture encoding signal is incorporated in the said first section in frequency-division multiplex with the sound/data component, said digital picture encoding signal having a bit rate which is in a fixed ratio to and is at most equal to that of the sound/data component.

2. A TV broadcasting system as claimed in Claim 1, characterized in that the bit rate of the digital sound/data component is an integral multiple of that of the picture encoding signal and in that the digital picture encoding signal is modulated at a subcarrier frequency which is an integral multiple of half the clock frequency of the digital picture encoding signal.

3. A TV broadcasting system as claimed in Claim 1 or 2, characterized in that the subcarrier frequency of the digital picture encoding signal is at half the sampling frequency of the time-compressed luminance component.

4. A TV broadcasting system as claimed in Claim 1, charaterized in that the picture encoding signal comprises motion information.

5. A TV transmitter for use in a TV broadcasting system as claimed in any one of the preceding Claims, characterized by a duobinary encoding circuit for duobinary encoding the digital picture encoding signal, which circuit comprises an exclusive OR-gate having first and second inputs and an output, the first input constituting an input for the digital picture encoding signal and the output being connected to the second input via a first delay circuit, said output being coupled to a first input of a subtractor stage and to a second input of the subtractor stage via a second delay circuit, said subtractor stage supplying the binary encoded picture encoding signal, said first and second delay circuits realizing a mutually equal bit delay having a value which is at most equal to the clock period of the digital encoding signal.

6. A TV transmitter as claimed in Claim 5, charaterized by an interpolation filter coupled to the output of the duobinary encoding circuit and having a sampling frequency which is an integral multiple of the clock frequency of the digital picture encoding signal for a selection of a frequency spectrum of the digital picture encoding signal with a central frequency at half the sampling frequency of the time-compressed picture and luminance components.

7. A TV receiver for use in a TV broadcasting system as claimed in any one of Claims 1 to 3, comprising a time-division demultiplexing device, characterized by a frequency-division demultiplexing circuit coupled to an output of said device for demultiplexing the sound/data component and the picture encoding signal incorporated in the first section in frequency-division multiplex, said circuit being coupled via a time expansion circuit to a picture encoding signal processing device, and comprising a clock frequency circuit for deriving the clock frequency of the digital picture encoding signal from that of the sound/data component which is coupled to the time expansion circuit.

8. A TV receiver as claimed in Claim 7, characterized in that the frequency-division demultiplexing circuit is preceded by a low-pass filter having a Nyquist edge at half the sampling frequency of the time-compressed luminance component.

9. A TV receiver as claimed in Claim 7 or 8, characterized by a Viterbi decoding coupled to an output of the frequency-division demultiplexing device and adapted to the duobinary encoding for a correction of errors in at least the digital picture encoding signal.

10. A TV receiver as claimed in Claims 7 and 8 for use in a TV broadcasting system as claimed in Claim 1, comprising a clock regeneration circuit for regeneration of a clock frequency of 20.25 MHz, characterized in that the frequency-division demultiplexing circuit comprises first and second sampling circuits which are jointly connected to an input of the frequency-division demultiplexing circuit to which the last-mentioned clock frequency is applied for alternately sampling the frequency-division multiplex signal incorporated in the first section in the first and second sampling circuits, and outputs of which are coupled to an adder stage and a subtractor stage for a mutual addition and subtraction, respectively, of the output samples of the first and second sampling circuits, said adder stage being coupled to a sound/data signal processing device via a low-pass filter having a cut-off frequency of half the clock frequency of the sound/data component, said subtractor stage being coupled to the picture encoding processing device via a low-pass filter having a cut-off frequency of half the clock frequency of the digital picture encoding signal.

11. A TV receiver for use in a TV broadcasting system as claimed in Claim 4, characterized by means for processing the motion information comprised in the picture encoding signal.

8

S/D  C  U/V  Y

**FIG.1**

Ampl.  $f_{D2}$  $f_{LPN}$  $f_{HD}$  $f_{HD'}$

$1/2 f_{cl}$  $5/6 f_{cl}$  $f_{cl}$  MHz

**FIG.2**

Ampl.  $f_1$  $f_2$  $f_3$  $f_4$

$f_{SC} = 5/6 f_{cl}$  $f_{cl}$  MHz

**FIG.3**

FIG.4

FIG.5

European Patent Office

EUROPEAN SEARCH REPORT

Application Number

EP 88 20 2737

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | INTERNATIONAL BROADCASTING CONVENTION, Brighton, 21st-25th September 1984, pages 94-102; M.D. WINDRAM et al.: "Extended definition television - the MAC approach" <br> * Whole article * <br> --- | 1,7 | H 04 N 7/00 |
| A | EP-A-0 168 104 (N.V. PHILIPS' GLOELAMPENFABRIEKEN) <br> * Whole document * <br> --- | 1,5,7 | |
| A | NHK LABRATORIES NOTE, no. 304, September 1984, pages 1-12, NHK, Tokyo, JP; Y. NINOMIYA et al.: "A single channel HDTV broadcast system - the muse" <br> * Page 5, paragraph 2.3: "System construction"; page 7, paragraph 2.4: "Signal format" * <br> --- | 1,5,7 | |
| A | SPECIFICATION OF THE SYSTEMS OF THE MAC/PACKET FAMILY, Techn. 3258-E, October 1986, 358 pages, editor: G. WATERS, Brussels, BE, European Broadcasting Union Technical Centre <br> * Part 1, pages 19-21, paragraph 4.3: "D2-MAC packet"; part 7, page 258, paragraph 4.2: "Filtering for D2-MAC/packet" * <br> --- | 1,5 | TECHNICAL FIELDS SEARCHED (Int. Cl.4) <br><br> H 04 N |
| | -/- | | |

The present search report has been drawn up for all claims

| Place of search | Date of completion of the search | Examiner |
|---|---|---|
| THE HAGUE | 02-03-1989 | VERSCHELDEN J. |

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | MODIFICATIONS TO E.B.U. Doc. Techn. 3258, October 1987, "Specification of the systems of the MAC/packet family", SPB 438, 37 pages, edited by: The European Broadcasting Union Technical Centre, Brussels, BE <br> * Pages 31,32: "New appendix 1bis- part 7, paragraph 3.4: "Baseband filtering"; paragraph 3.6: "The duobinary decoder" * <br> ----- | 1,7,9 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 02-03-1989 | VERSCHELDEN J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
  ...........................................................................
& : member of the same patent family, corresponding
    document

EPO FORM 1503 03.82 (P0401)